# EUROPÄISCHE PATENTANMELDUNG

(11) **EP 1 708 342 A2**
(43) Veröffentlichungstag der Anmeldung: **04.10.2006**
(21) Anmeldenummer: 06111051.6
(22) Anmeldetag: 13.03.2006
(51) Int. Cl.: H02K 19/38

(54) **Rotierender Erreger für hohe Ströme**

(30) Priorität: 31.03.2005 CH 5852005
(71) Anmelder: Alstom Technology Ltd, 5400 Baden (CH)
(72) Erfinder: Lacaze, Alain, 90850 Essert (FR)

(57) **Zusammenfassung**

Die vorliegende Erfindung bezieht sich auf einen Rotor (11) für einen Erreger, welcher dazu verwendet werden kann, die Feldwicklung eines Rotors (22) eines Generators zu speisen. Eine besonders einfache und sehr zuverlässige Bauweise eines solchen Rotors insbesondere zur Verwendung bei hohen Drehzahlen ist möglich, wenn der Rotor (11) wenigstens zwei Leiterstäbe (4) aufweist, welche im Wesentlichen parallel zur Achse (20) des Rotors (11) angeordnet sind, wenn die Stäbe (4) an ihrem ersten axialen Ende mit wenigstens einem Sammelring (3) und an ihrem zweiten axialen Ende einzeln mit zwei Ringen (1, 2) verbunden sind, wobei der Stromfluss in jedem Stab (4) mittels wenigstens einer Diode (5) nur in einer Richtung zulässig ist, so dass Wechselstrom, welcher in den Leiterstäben (4) als Folge eines statischen Feldes (6, 7) induziert wird, in einen Gleichstrom (DC) in den zwei Ringen (1, 2) konvertiert wird.

## Beschreibung

### Technisches Gebiet

Die vorliegende Erfindung bezieht sich auf das Gebiet der Erregervorrichtungen für Generatoren. Insbesondere bezieht sie sich auf einen Rotor für einen bürstenlosen Erreger, welcher dazu verwendet werden kann, die Feldwicklung eines Rotors eines Generators mit Energie zu versorgen. Weiterhin bezieht sie sich auf einen bürstenlosen Erreger mit einem solchen Rotor.

### Hintergrund der Erfindung

Eine synchrone Maschine ist eine dynamo-elektrische Maschine, welche als Motor zum Antrieb einer Welle oder einer Last bei konstanter Geschwindigkeit verwendet werden kann, oder als Generator zur Erzeugung einer Spannung bei einer bestimmten Frequenz in Abhängigkeit der Geschwindigkeit der angetriebenen Welle. Wenn die Vorrichtung als Synchron-Generator verwendet wird ist es üblich, beispielsweise die Felderregung für den Rotor durch einen synchronen, bürstenlosen Erregergenerator zur Verfügung zu stellen. Der Erregergenerator konvertiert das Gleichstrom (DC) Statorfeld in eine Mehrphasen-Wechselstrom (AC) Ankerspannung, welche durch einen Satz von rotierenden Gleichrichtern, welche auf oder innerhalb der Antriebswelle angeordnet sind, gleichgerichtet wird, um die DC-Erregung für die Feldwicklungen des Synchrongenerators zur Verfügung zu stellen, d.h. für den Rotor des Generators.

Entsprechend ist ein rotierender Erreger ein umgekehrter Generator mit der Feldwicklung, welche mit Gleichstrom angesteuert wird, implementiert auf den statischen Teilen. Der Anker ist auf dem rotierenden Teil angeordnet und erzeugt eine Wechselspannung. Ein Satz von parallelen Dioden mit umgekehrter Polarität wird dazu verwendet, diesen gleichzurichten, um einen Gleichstrom zu erzeugen, welcher erforderlich ist, um die Feldwicklung der synchronen Maschine, d.h. des Rotors, mit Energie zu versorgen.

In Bezug auf die Grössenordnung ist die vom Erreger erzeugte Leistung im Bereich von 0.5 bis 2 % der Auslegungsleistung der synchronen Maschine. Weil der rotierende Erreger ein Generator ist, kann diese Leistung gleichermassen mit niedriger, mittlerer oder hoher Spannung zur Verfügung gestellt werden. Das Gleichgewicht zwischen Spannung und Strom wird so ausgewählt, um den verfügbaren Charakteristiken der Dioden am besten zu entsprechen. Im Prinzip kann die Einschränkung des Ausgangsstroms infolge der verfügbaren Dioden überwunden werden, indem zwei oder mehrere Dioden parallel angeordnet werden. Dies würde aber eigentlich in einer starken Überlast auf den Dioden resultieren, und entsprechend gibt es die Notwendigkeit eines starken Zurücknehmens von deren Auslegung.

Heutzutage werden normalerweise Rotoren bei Geschwindigkeiten von 3000 Umdrehungen pro Minute betrieben, was bei Strömen im Bereich von 2000 Ampere zur Energieversorgung der Feldwicklung der Synchronmaschine führt. Aufgrund einer Anzahl von Einschränkungen, wie beispielsweise Instabilität der Welle, sowie hohe zentrifugale Kräfte auf den rotierenden Teilen kann die Synchronmaschine normalerweise nicht bei höheren Drehzahlen betrieben werden. Bei der Stromerzeugung ist, bei vorgegebener Leistung, eine Drehzahlerhöhung einer Turbine mit einer Reduktion der Baugrösse und der Kosten verbunden. Auch die Leistung kann verbessert werden. Daher gibt es zur Stromerzeugung bereits Turbinen mit bis zu 70 MW, welche mit entsprechenden Generatoren unter Zuhilfenahme von Getriebeanordnungen verbunden sind, um den Betrieb bei grösseren Drehzahlen zu erlauben. Dementsprechend gibt es einen Bedarf für Rotoren von Erregern, welche bei hohen Drehzahlen betrieben werden können, was normalerweise eine leichte Konstruktion, einen kleineren Durchmesser sowie grössere Dimensionen in axialer Richtung und gleichzeitig grosse Stabilität in Bezug auf zentrifugale Kräfte bedeutet.

### Zusammenfassung der Erfindung

Die objektive Aufgabe, welche der vorliegenden Erfindung zugrunde liegt, besteht entsprechend darin, einen verbesserten Rotor für einen Erreger zur Verfügung zu stellen, welcher dazu verwendet werden kann, die Feldwicklung eines Generator-Rotors eines zu speisen. Er soll insbesondere für bürstenlose Erregung nutzbar sein und durch eine einfache und widerstandsfähige Konstruktion gekennzeichnet sein, welche für einen Betrieb bei hohen Drehzahlen und für die Erzeugung von hohen Gleichströmen ausgelegt ist.

Die vorliegende Erfindung löst das obengenannte Problem, indem der Rotor wenigstens zwei Leiterstäbe umfasst, welche im Wesentlichen parallel zur Achse des Rotors angeordnet sind, indem die Stäbe an ihrem ersten axialen Ende mit wenigstens einem Sammelring verbunden sind, und indem sie an ihrem zweiten axialen Ende einzeln mit zwei Ringen verbunden sind, wobei mittels wenigstens einer Diode der Stromfluss in jedem Stab nur in einer Richtung zugelassen wird, so dass Wechselstrom, welcher in den Leiterstäben aufgrund eines statischen Feldes induziert wird, in einen Gleichstrom (DC) in den beiden Ringen konvertiert wird.

Gegenstand der vorliegenden Erfindung ist entsprechend ein Rotor nach Anspruch 1, sowie ein bürstenloser Erreger nach Anspruch 22.

Der Kern der Erfindung ist entsprechend die Tatsache, dass es möglich ist, eine Rotor-Konstruktion zu verwenden, welche so ausgestaltet ist, dass der induzierte Strom in jedem, einem Induktionsfeld ausgesetzten Leiterstab, nur in einer spezifischen Richtung, jedoch nicht in der anderen Richtung, erlaubt wird. Dies bedeutet, dass die Dioden in jedem elektrischen Pfad den möglichen Stromfluss auf eine Richtung einschränken (nur Dioden einer bestimmten Polarität vorhanden, nie parallele Dioden von entgegengesetzter Polarität), und es bedeutet zusätzlich, dass während 50% der Zeit ein bestimmter Stab nicht zur Erzeugung von Gleichstrom beitragen wird, da der induzierte Strom nicht zulässig ist infolge der blockierenden Polarität der verbundenen Diode. Entsprechend ist vorzugsweise in jedem elektrischen Pfad eine einzige Diode oder eine Gruppe von Dioden vorgesehen, wobei die Dioden des Rotors parallel angeordnet sind, und wobei, wenn eine Gruppe von Dioden vorgesehen ist, alle Dioden von gleicher Polarität sind, unabhängig davon, ob sie in Reihe oder parallel angeordnet sind.

Dies ist im Gegensatz zu Rotoren des Standes der Technik, welche normalerweise unter Verwendung einer parallelen Anordnung von Dioden mit entgegengesetzter Polarität sicherstellen, dass in jedem Leiterstab ein Stromfluss in beiden Richtungen erlaubt wird, abhängig von der Polarität des Induktionsfeldes, welches im Moment auf den Stab einwirkt. Die vorgeschlagene, stark vereinfachte Lösung erlaubt hingegen eine sehr widerstandsfähige und zuverlässige Konstruktion ohne Leistungsverluste. Typischerweise kann die vorgeschlagene Konstruktion bei Geschwindigkeiten von 6000 bis 8000 Umdrehungen pro Minute betrieben werden, wobei beispielsweise ein Gleichstrom in den beiden (DC) Ringen von mehr als 2000 Ampere induziert wird, vorzugsweise ein Gleichstrom von mehr als 10000 oder bis zu 70000 Ampere, in Abhängigkeit von der Stärke des statischen Induktionsfeldes.

Der erwartete Vorteil der Verwendung nur einer einzigen Diode in einem elektrischen Pfad, verglichen mit der Situation mit zwei gekreuzten Dioden nach dem Stand der Technik, ist eine Reduktion von Verlusten um einen Faktor 2. Die Einsparung beträgt mehr als 12 kV.

In einer ersten bevorzugten Ausführungsform der vorliegenden Erfindung mit wenigstens 4 Stäben, gibt es zwei Gruppen von Leiterstäben, wobei die erste Gruppe direkt an ihrem ersten axialen Ende mit wenigstens einem Sammelring verbunden ist, und an ihrem zweiten axialen Ende mit einem der beiden Ringe für den Gleichstrom, welcher durch den Rotor erzeugt wird, und wobei die zweite Gruppe an ihrem ersten axialen Ende indirekt mit wenigstens einem Sammelring über wenigstens eine Diode verbunden ist, und ihr zweites axiales Ende mit dem anderen der beiden Ringe für das Sammeln des Gleichstroms verbunden ist. Im Wesentlichen bedeutet dies, dass in dieser Ausführungsform die Dioden normalerweise auf der Sammelring-Seite des Rotors angeordnet sind.

In einer anderen bevorzugten Ausführungsform der vorliegenden Erfindung, in welcher die Dioden normalerweise auf der DC-Ring Seite des Rotors angeordnet sind, gibt es zwei Gruppen von Leiterstäben, wobei die Stäbe der ersten Gruppe an ihrem ersten axialen Ende mit wenigstens einem Sammelring verbunden sind, und mit ihrem zweiten axialen Ende direkt mit einem der beiden Ringe für die Sammlung des Gleichstroms verbunden sind, und wobei die Stäbe der zweiten Gruppe an ihrem ersten axialen Ende mit wenigstens einem Sammelring verbunden sind und an ihrem zweiten axialen Ende indirekt über wenigstens eine Diode mit dem anderen der beiden Ringe für die Sammlung des Gleichstroms verbunden sind.

Nach einer anderen bevorzugten Ausführungsform ist der Rotor dadurch gekennzeichnet, dass der Erreger ein statisches Feld mit m Polen umfasst, und dass der Rotor n Stäbe umfasst, welche gleichmässig um den Umfang des Rotors verteilt sind, wobei die Stäbe derart verbunden sind, dass es wenigstens einen direkt verbundenen Stab gibt, welcher einem statischen Induktionsfeld einer ersten Polarität unterworfen ist, und dass es wenigstens einen indirekt verbundenen Stab gibt, welcher einem statischen Induktionsfeld einer zweiten Polarität unterworfen ist, und wobei Paare oder Gruppen, gebildet durch wenigstens einen direkt verbundenen Stab und wenigstens einen indirekt verbundenen Stab, mit dem gleichen Sammelring verbunden sind. Typischerweise wird eine solche Konstruktion zusammen mit einer hohen Anzahl von Polen des statischen Feldes (beispielsweise 6,8,10 oder sogar mehr) verwendet, und mit einer grossen Zahl n von Stäben von mehr als 50, bis zu 100, typischerweise ungefähr 70, wobei alle gleichmässig um den Umfang des Rotors verteilt sind. Wenn eine solche Anzahl von Stäben oder ein statisches Induktionsfeld mit 10 Polen verwendet wird, werden 5,10 oder 7 Sammelringe eingesetzt.

Entsprechend kann der Erreger für ein statisches Feld mit m Polen ausgelegt werden, der Rotor umfasst dabei n Stäbe, welche gleichmässig um den Umfang des Rotors verteilt sind, und die Anzahl o von Sammelringen ist in diesem Falle o = m/n. Das System ist verbunden, indem für jeden Pol des statischen Feldes ein direkt verbundener Stab vorhanden ist, welcher einem statischen Induktionsfeld einer ersten Polarität unterworfen ist, und dass es einen indirekt verbundenen Stab gibt, welcher einem statischen Induktionsfeld zweiter Polarität unterworfen ist, wobei für jedes Polpaar des Stators ein Paar Stäbe, gebildet durch einen direkt verbundenen Stab und einen indirekt verbundenen Stab, mit dem gleichen Sammelring verbunden ist, und wobei äquivalente Paare von Stäben von unterschiedlichen Polpaaren mit dem gleichen Sammelring verbunden sind. Die optimale Effizienz eines solchen topologischen Netzwerkes von Leitern kann erreicht werden, wenn um den Umfang des Rotors herum jeder o-te Leiterstab des Rotors direkt oder indirekt mit dem gleichen Sammelring verbunden ist. Die Rotorkonstruktion hat entsprechend eine m-fache Symmetrie, und eine 2m-fache Symmetrie (abwechselnd direkte und indirekte Stäbe), was die Konnektivität der Stäbe mit einem bestimmten Sammelring betrifft.

Entsprechend einer weiteren bevorzugten Ausführungsform ist die Rotorkonstruktion dadurch gekennzeichnet, dass die Sammelringe umlaufend sind, und dass vorzugsweise auch die beiden (DC) Ringe umlaufend sind. Eine solche Konstruktion ist besonders widerstandsfähig für hohe Drehzahlen.

Um höchstmögliche Leistung der induzierten Ströme zu erreichen, ist es vorteilhaft, die Stäbe so nahe wie möglich an der radialen Oberfläche des Rotors anzuordnen. Vorzugsweise sind die Stäbe so nahe wie möglich beim Luftspalt zwischen dem Rotor und dem äusseren statischen Kern des Stators angeordnet.

In Bezug auf die Stäbe, welche für den Rotor verwendet werden, sind diese vorzugsweise aus Eisen, Aluminium oder Kupfer gefertigt, mit einem im wesentlichen kreisförmigen Querschnitt, mit einem Durchmesser im Bereich von 5 mm bis 20 mm, vorzugsweise mit einem Durchmesser von 8 mm bis 15 mm. In Bezug auf die Ringe, seien es die Sammelringe auf der einen Seite oder die Gleichstromringe auf der anderen Seite des Rotors, sind diese Ringe vorzugsweise ebenfalls aus Eisen, Aluminium oder Kupfer gefertigt, mit einer Querschnittfläche im Bereich von 500 mm² bis 3000 mm², vorzugsweise mit einer Querschnittfläche im Bereich von 1000 mm² bis 2000 mm².

Entsprechend einer weiteren bevorzugten Ausführungsform ist der genannte Rotor auf der gleichen Welle angeordnet wie der Rotor des Generators, welcher den gewünschten Wechselstrom im Hauptstator des Generators induziert, und die beiden DC-Ringe sind auf der Generator-Rotor Seite des Rotors, und die Sammelringe sind auf der anderen Seite des Rotors angeordnet. In Abhängigkeit von der gewählten Konnektivität sind die Dioden dann entweder auf der Generator-Rotor Seite der Welle angeordnet, oder an der terminalen Seite der Welle. Vorzugsweise sind die Dioden an der Generator-Rotor Seite des Rotors angeordnet, da sie dann normalerweise näher bei einem Ventilator angeordnet sind und effizienter gekühlt werden.

Um die Verwendung von für hohe Ströme ausgelegten Dioden zu ermöglichen, und um gleichzeitig hohe Drehzahlen zu erlauben, sind die Dioden entsprechend einer anderen bevorzugten Ausführungsform der vorliegenden Erfindung auf der inneren Oberfläche eines umlaufenden Halterings (Endring) des Rotors angeordnet. Dieser umlaufende Haltering kann, wiederum entsprechend der gewählten Konnektivität, entweder an der Endseite der Welle oder an der Generator-Rotor Seite der Welle angeordnet sein.

Weitere bevorzugte Ausführungsformen des Rotors nach der Erfindung sind in den weiteren abhängigen Ansprüchen definiert.

Die vorliegende Erfindung bezieht sich, wie dies bereits weiter oben erwähnt wurde, zudem auf einen bürstenlosen Erreger zur Verwendung mit einem Synchron-Generator zur Speisung der Feldwicklung von dessen Rotor, umfassend einen Rotor, wie er oben beschrieben wurde. Typischerweise ist ein solcher bürstenloser Erreger dadurch gekennzeichnet, dass ein mehrpoliges statisches Feld durch wenigstens eine Feldwicklung induziert wird, welche mit einem Gleichstrom im Bereich von 1 bis 100 Ampere angesteuert wird, vorzugsweise im Bereich von 5 bis 15 Ampere, oder dass das mehrpolige statische Feld durch wenigstens einen Permanent-Magneten induziert wird. Vorzugsweise stellt der Stator ein mehrpoliges statisches Feld mit m Polen zur Verfügung, wobei m eine ganze gerade Zahl im Bereich von 4 bis 16 ist, vorzugsweise zwischen 6 und 10. Ein solcher bürstenloser Erreger ist vorzugsweise in die gesamte Generator-Konstruktion integriert, indem der Rotor auf der gleichen Welle angeordnet ist wie der Generator-Rotor, und indem die beiden DC-Ringe auf der Generator-Rotor Seite des Rotors und die Sammelringe auf der anderen Seite des Rotors angeordnet sind.

Weitere bevorzugte Ausführungsformen des bürstenlosen Erregers nach der vorliegenden Erfindung sind in den abhängigen Ansprüchen angegeben.

### KURZE BESCHREIBUNG DER FIGUREN

Eine umfassendere Würdigung der Erfindung und viele der damit verbundenen Vorteile werden einfach ersichtlich, wenn diese unter Bezugnahme auf die folgende detaillierte Beschreibung, im Zusammenhang mit den beiliegenden Figuren, besser verstanden wird, wobei:
- Fig. 1: eine schematische Darstellung der Konnektivität entsprechend einer ersten Ausführungsform des Rotors nach der Erfindung darstellt;
- Fig. 2: eine schematische Darstellung der Konnektivität entsprechend einer zweiten Ausführungsform eines Rotors nach der Erfindung darstellt;
- Fig. 3: a) eine Ansicht von oben auf einen bürstenlosen Erreger einschliesslich des statischen Teils nach der Erfindung;
b) eine Ansicht von oben auf einen Rotor nach der Erfindung darstellt;
- Fig. 4: eine detaillierte perspektivische Ansicht der Region des Rotors zeigt, in welcher Dioden angeordnet sind;
- Fig. 5: eine detaillierte perspektivische Ansicht entsprechend Fig. 4 zeigt, in welcher die Hälfte der Stäbe, sowie auch Gehäuse- und BlechpaketKomponenten entfernt sind;
- Fig. 6: eine perspektivische Ansicht eines Rotors nach der Erfindung zeigt;
- Fig. 7: zwei perspektivische Ansichten eines bürstenlosen Erregers nach der Erfindung zeigt, wobei a) eine Ansicht von der Seite zeigt, auf der die DC-Ringe angeordnet sind, und b) eine Ansicht von der Seite zeigt, auf der die Dioden angeordnet sind;
- Fig. 8: eine Seitenansicht des Abschnitts der Welle des Generators zeigt, an dem der bürstenlose Erreger angeordnet ist, einschliesslich von Teilen des Hauptrotors des Generators; und
- Fig. 9: a) eine axiale Sicht auf das Ende des Rotors zeigt, in welchem die Dioden und die Sammelringe an entgegengesetzten Enden des Rotors nach einer anderen Ausführungsform der Erfindung angeordnet sind; b) einen axialen Schnitt durch einen solchen Rotor zeigt; c) die Details der Verbindung der indirekten Stäbe in einer Schnitt-Darstellung zeigt; d) die Details um die Dioden herum in einer Ansicht entsprechend a) zeigt; e) eine perspektivische Ansicht des ersten DC-Ringes zeigt.

### DETAILLIERTE BESCHREIBUNG DER AUSFÜHRUNGSBEISPIELE

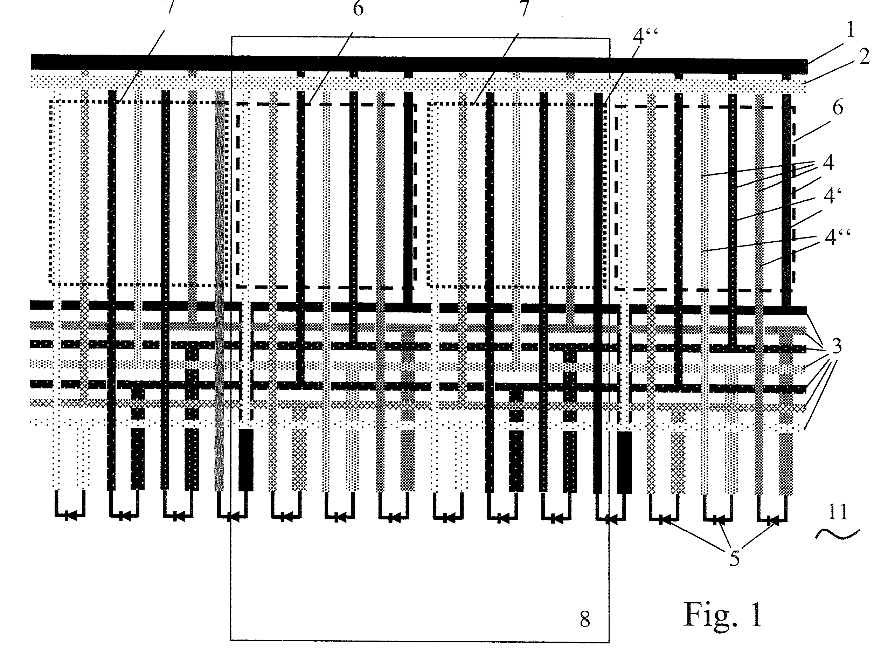

Figur 1 zeigt eine Teilansicht der aufgerollten Konnektivität (Umfangsansicht) eines ersten Ausführungsbeispiels eines Rotors nach der Erfindung. Der Rotor 11 ist dafür ausgelegt, mit einem statischen Induktionsfeld mit m = 10 Polen betrieben zu werden. Entsprechend stellt der statische Teil (Stator 9) ein statisches Feld mit alternierenden Induktionsfeldern 6 einer ersten Polarität und Induktionsfeldern 7 einer zweiten Polarität zur Verfügung. Die Polteilung (pole pitch), entsprechend fünfmal wiederholt, ist mit dem Bezugszeichen 8 angedeutet. Auf der einen Seite (oben) gibt es zwei Gleichstromringe (DC-Ringe) 1 und 2, deren Ströme zum Rotor 22 des Generators geführt werden, zur Speisung der Feldwicklungen des Rotors 22. Auf der anderen Seite (unten) gibt es o = 7 Sammelringe 3, wobei jeder als Sternpunkt-Ring dient. Jeder dieser Sammelringe 3 ist über zwei Stäbe 4' und 4", welche innerhalb einer Polteilung 8 angeordnet sind, mit den Gleichstromringen 1, 2 verbunden.

Wenn man beispielsweise den obersten Sammelring 3 (ausgezogene schwarze Linie) betrachtet, dann ist dieser über den äussersten rechten Stab 4' ("direkter Stab") direkt mit dem ersten Gleichstromring 1 verbunden. Dieser direkte Stab 4' ist einem Induktionsfeld 6 der ersten Polarität des Stators unterworfen. Der zweite Stab 4", wenn man nun nach links geht, ist ebenfalls mit dem obersten Sammelring verbunden, und ist einem Induktionsfeld 7 der zweiten Polarität des Stators unterworfen. Dieser zweite oder indirekte Stab 4" ist an seiner oberen Seite mit dem zweiten Gleichstromring 2 und auf seiner unteren Seite mit dem Sammelring 3 über eine Diode 5 verbunden. Dies bedeutet, dass, wenn die Polarität der beiden Felder 6 und 7 dergestalt ist, dass die Richtung des induzierten Stromes in den Stäben 4' und 4" durch die Diode 5 erlaubt wird, dieser zum Gleichstrom beitragen wird, welcher an die Gleichstromringe 1 und 2 abgegeben wird. Wenn aber, infolge der Rotation des Rotors in die nächste Polteilung 8, die Polarität der beiden Felder 6 und 7 umgekehrt ist, dann wird der in diesen beiden Stäben induzierte Strom durch die Diode 5 blockiert sein.

Aus diesem Beispiel kann ersehen werden, dass die Konnektivität, wie sie in Figur 1 dargestellt ist, wenn sie im mehrpoligen statischen Feld rotiert wird, zu einer Situation führt, in welcher ein bestimmter Sammelring 3 während 50% der Zeit, nämlich dann, wenn die Polarität der Felder 6 und 7 und entsprechend die Richtung des induzierten Stromes in den Stäben mit der Richtung der Dioden 5 übereinstimmt, zum in den Ringen 1 und 2 induzierten Gleichstrom beitragen wird. In den anderen 50% der Zeit, nämlich dann, wenn die Polarität der Felder 6 und 7 und entsprechend die Richtung des induzierten Stromes in den Stäben der Richtung der Dioden 5 entgegengesetzt ist, wird der Sammelring nicht aktiv sein und nicht zum Gleichstrom in den Ringen 1 und 2 beitragen. Mit anderen Worten wird jeder Stab nur während 50% der Zeit zum in den Ringen 1 und 2 zur Verfügung gestellt Gleichstrom beitragen, Aber infolge der Tatsache, dass es mehrere Sammelringe gibt, jeder mit entsprechend rotierten und umgekehrt verschobenen Stäben, gibt es immer Sammelringe und Stäbe, welche zum in den Ringen 1 und 2 zur Verfügung gestellten Gleichstrom beitragen.

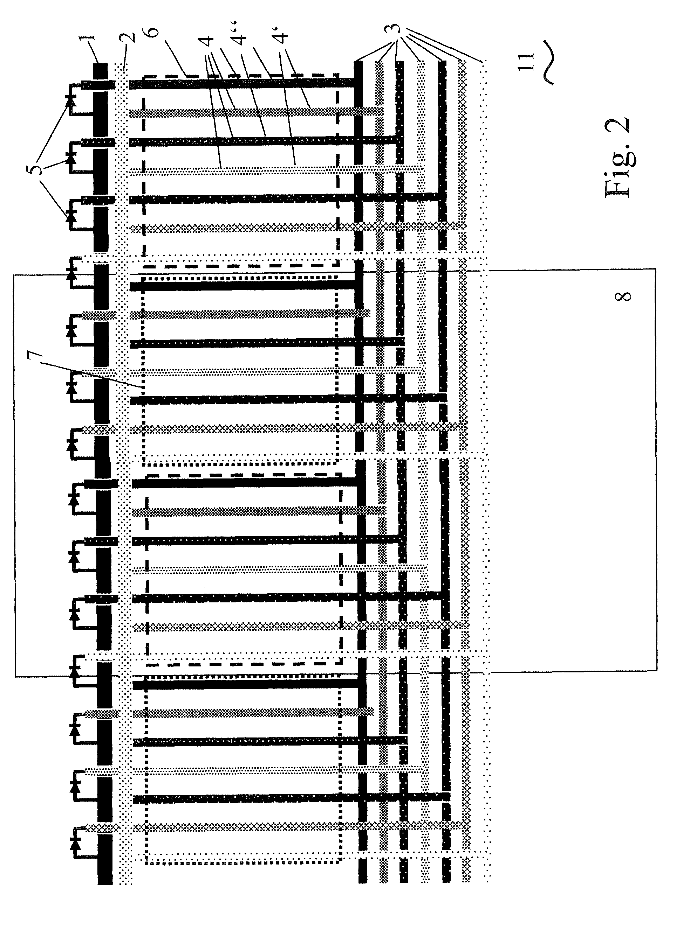

Während in Figur 1 die Dioden auf der Sammelring-Seite des Rotors angeordnet sind, zeigt Figur 2 ein anderes Ausführungsbeispiel, in welchem die Dioden auf der Gleichstromring-Seite angeordnet sind. Da normalerweise die Gleichstromringe 1 und 2 auf jener Seite der Welle angeordnet sind, welche benachbart zum Rotor 22 des Generators ist, und da die Kühlbedingungen in diesen Regionen besser sein können und entsprechend geeigneter für ein einwandfreies Funktionieren der Dioden 5 sind, kann das in Figur 2 angegebene Design, obwohl es im Wesentlichen äquivalent zur Konnektivität von Fig. 1 ist, in gewissen Situationen vorteilhaft sein. Eine Konnektivität nach Figur 2 zeigt die folgenden Vorteile:
- Möglichkeit der Verbesserung der Kühlung und Ventilation des Diodenringes
- Vereinfachung der Verwendung eines zweiten Dioden-Wafers
- Reduktion der Überstandlänge des Dioden-Bereiches
- Vergrösserung des Abstandes zwischen Ventilator und Erregerfeldwicklung (Statorwicklungen 10)
- Verbesserung der Kühlung der Endringe
- Vereinfachung des Gehäuses und der Abschirmung 18
- Vermeidung von hervorstehenden Teilen (Diodenring-Durchmesser ist grösser als die Bohrung).

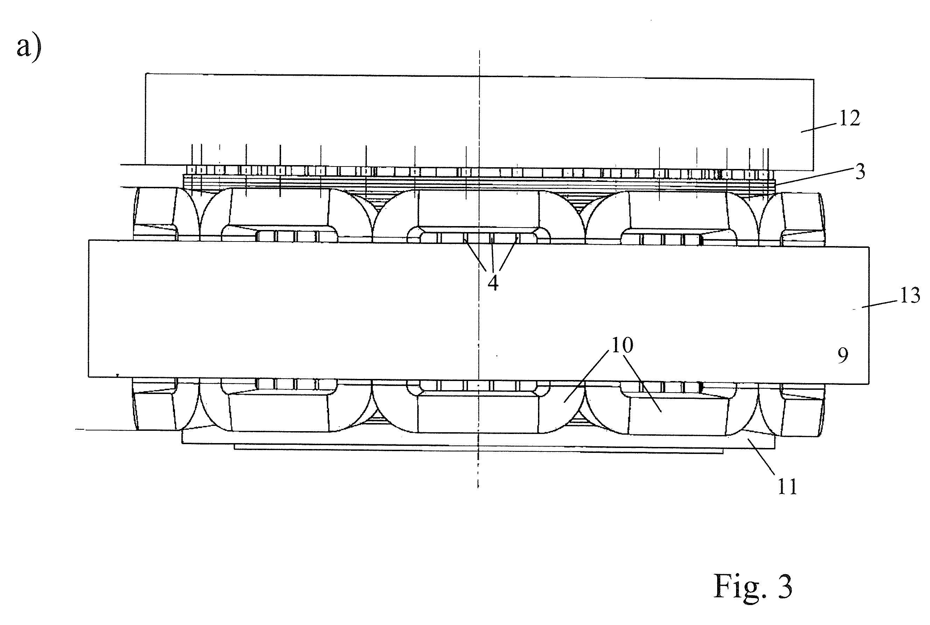

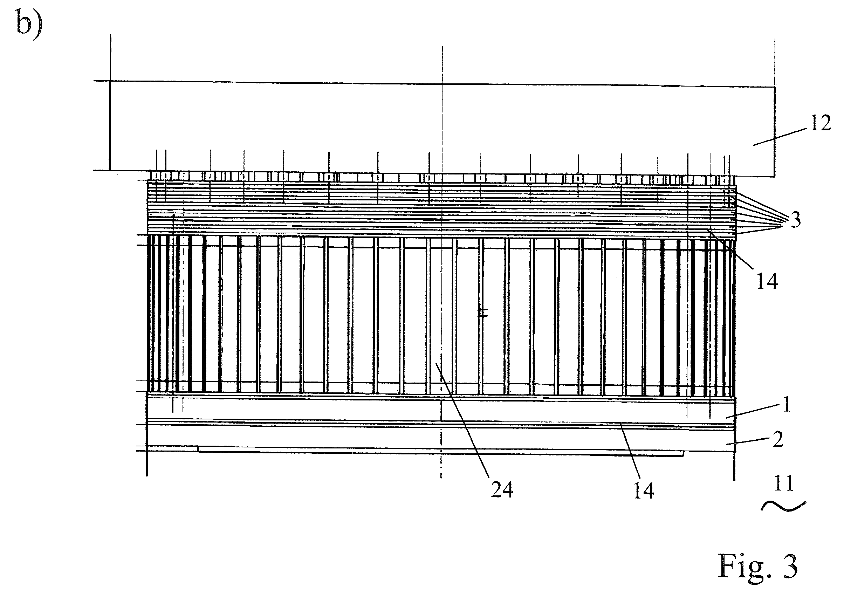

Um das Design eines solchen Rotors detaillierter zu zeigen, gibt Figur 3a) eine Ansicht von oben auf einen bürstenlosen Erreger. Er umfasst also auch die statischen Teile, d.h. den Stator 9, welcher einen umlaufenden Ring 13 aufweist, an dessen innerer Oberfläche die Statorwicklungen 10 für die Erzeugung des Induktionsfeldes 6 und/oder 7 vorgesehen sind. Im vorliegenden Ausführungsbeispiel ist ein Stator 9 mit m = 10 Polen dargestellt, entsprechend gibt es 10 solche Wicklungen 10. Der Rotor 11 ist koaxial in diesem äusseren statischen Kern (Stator 9) gelagert, wobei es dazwischen einen Luftspalt gibt.

Der Rotor 11 des bürstenlosen Erregers ist ebenfalls teilweise sichtbar. Insbesondere ist der Haltering 12 (Endring) des Erreger-Rotors sichtbar, dessen Details weiter unten erklärt werden. Zudem können die Sammelringe 3 gesehen werden sowie die Leiterstäbe 4 des Rotors 11, soweit sie von der Aussenseite teilweise sichtbar sind (für mehr Details siehe weiter unten).

Figur 3b) gibt die gleiche Ansicht wie Figur 3a) wobei die statischen Teile entfernt sind. Der Rotor 11 umfasst, auf einer Seite, die beiden Gleichstromringe 1 und 2, welche durch eine Isolationsschicht 14 voneinander separiert sind. Die beiden Gleichstromringe 1 und 2 sind als umlaufende Ringe ausgebildet. Auf der anderen axialen Seite des Rotors gibt es 7 Sammelringe 3, welche ebenfalls umlaufende Ringe sind, und welche durch Isolationsschichten 14 voneinander getrennt sind. Die Oberseite des Rotors 11 wird durch den umlaufenden Haltering 12 des Erregerrotors gebildet. Ebenfalls sichtbar sind die Blechpakete 24 des Rotors, welche die Stäbe 4 aufnehmen.

Wie aus Figur 3b) erkannt werden kann, aber auch aus den folgenden Figuren, sieht im Wesentlichen der rotierende Teil, d.h. der Rotor 11, sehr ähnlich aus wie der einer Induktionsmaschine mit einem Käfigläufer (Squirrel Cage Rotor). Auf der einen Seite sind alle Leiter, welche durch Stäbe 4 gegeben sind, verschweisst oder elektrisch verbunden mit den Sammelringen 3, welche den Strom sammeln und ihn den (zurückführenden) Stäben 4 übergeben. Auf der anderen Seite ist jeder Stab 4 elektrisch individuell mit den zwei Ringen 1 und 2 verbunden. Diese zwei Ringe 1 und 2 sind die DC Terminals. Alle Stäbe 4 sind identisch und sind gleichmässig um den Umfang des Rotors 11 verteilt. Gleichrichtung des Wechselstroms, welcher in den Stäben 4 induziert wird, wenn der Rotor 11 im statischen magnetischen Feld (Induktionsfeld 6, 7) rotiert, wird durch die Dioden gewährleistet, wobei, wie dies oben ausgeführt wurde, nur 50% der Stäbe effektiv zu den Strömen beitragen, welche in den zwei Ringen 1 und 2 generiert werden. Dies aufgrund der Tatsache, dass Stromfluss durch die Dioden 5 nur in einer Richtung erlaubt wird. Der Gleichstrom, wie er von den zwei Ringen 1 und 2 verfügbar ist, kann anschliessend dafür verwendet werden, den Rotor 22 des Generators zu speisen.

Die Stäbe sowie die Ringe 1, 2 und 3 sind aus Eisen, Kupfer oder Aluminium gefertigt. Für einen Durchmesser des Rotors 11 von ca. 500 bis 600 mm sind 70 Stäbe um den Umfang des Rotors 11 verteilt, wobei jeder der Stäbe 4 einen im Wesentlichen kreisförmigen Querschnitt mit einem Durchmesser von 8 bis 15 mm aufweist. Die Stäbe haben im vorliegenden Fall einen Durchmesser von 8 mm, sind aus Kupfer gefertigt und verfügen über eine Isolationsschicht von 1 mm. Die Isolation sollte so dünn wie möglich gehalten werden, um eine genügende Dissipation der Wärme, welche in den Stäben erzeugt wird, zu erlauben. Alternativ kann ein Stab aus Aluminium mit einem Durchmesser von 10 mm verwendet werden. Die Verwendung von Aluminium ist vorteilhaft wegen des gegenüber Kupfer viel geringeren Gewichtes. Für die Ringe 1,2 aber auch die Sammelringe 3 wird wegen des geringen Gewichts Aluminium bevorzugt, trotz der niedrigeren Leitfähigkeit.

Ein solcher Rotor ist dazu in der Lage, mit Geschwindigkeiten von 4000 bis 8000 Umdrehungen pro Minute zu rotieren, und Gleichströme im Bereich von 5000 bis 20000 oder bis 80000 Ampere zu produzieren. Die erreichbaren Drehzahlen sind dementsprechend wenigstens doppelt so hoch wie die konventionellen Geschwindigkeiten, und die erreichbaren Ströme sind gegenüber dem Stand der Technik sogar im Bereich von 20 bis 30 mal grösser. Die Ringe 1, 2, 3 sind umlaufend, um die zentrifugalen Kräfte bei diesen Umdrehungen aushalten zu können. Die Stäbe 4 können in entsprechende Schlitze der Blechpakete 24 des Rotors gegossen werden, wobei diese Schlitze vorzugsweise Formen haben, welche eine feste Fixierung der Stäbe in Bezug auf die zentrifugale Last erlauben (z.B. Schwalbenschwänze). Eine andere Möglichkeit, und das ist die hier dargestellte, ist es, axiale Löcher in den Blechpaketen 24 des Rotors 11 vorzusehen, und die Stäbe 4 von der axialen Seite in diese Löcher einzuschieben.

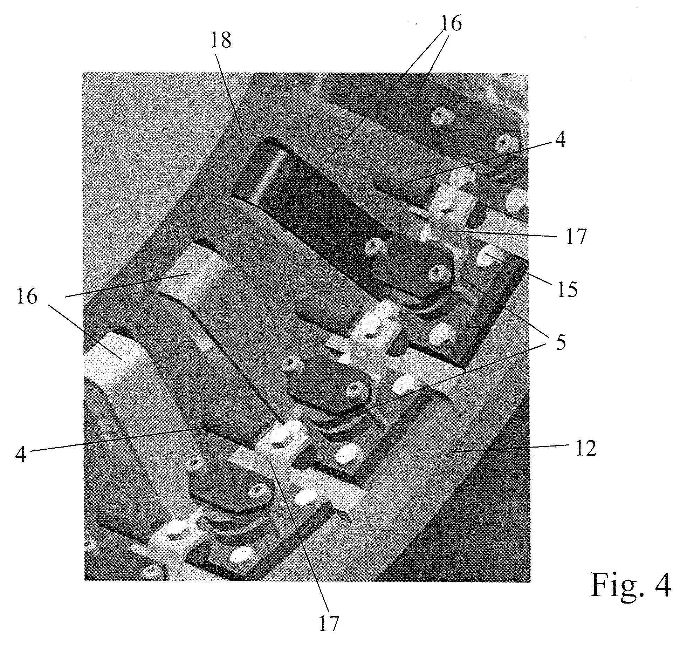

Figur 4 gibt eine detaillierte Ansicht eines Abschnittes der Seite des Rotors 11, wo die Sammelringe 3 sowie die Dioden 5 angeordnet sind. Es ist eine Sicht auf die innere Oberfläche des Halteringes 12. Auf der inneren Oberfläche des Halteringes 12 sind die Dioden 5 gleichmässig verteilt und mit dem Haltering 12 unter Zuhilfenahme von Schrauben 15 fixiert. Dies stellt eine sehr widerstandsfähige Konstruktion zur Verfügung, welche besonders zuverlässig ist, wenn hohe Drehzahlen verwendet werden.

Im vorliegenden Fall werden Hochleistungs-Dioden verwendet, wie beispielsweise der Dynex type PA 01597-477, welcher auf dem Wafer der Dynex diode reference DS502-1200 basiert. Eine der Hauptcharakteristiken eines solchen Aufbaus ist es, dass in Sperrrichtung eine repetitive Spannung von 1200 V ausgehalten werden kann. Für den Aufbau wie angegeben, d.h. für die 10 kA-, 10 Pol-, 70 Phasen-Konstruktion, wird ein mittlerer Diodenstrom von 300 A, ein RMS-Strom (root mean square) der Diode von 600 A und ein RMS-Strom in den Stäben von 600 A erwartet.

Figur 4 zeigt eine Konnektivität nach Figur 1. Entsprechend ist jeder zweite Stab 4 (in diesem speziellen Fall sind dies die indirekten Stäbe 4") direkt mit einer Diode 5 verbunden. Zu diesem Zweck sind Verbinder 17 mit den Enden der Stäbe 4 und den Dioden 5 befestigt. Die anderen Stäbe, welche nicht direkt mit den Dioden verbunden sind (entsprechend sind dies die direkten Stäbe 4'), sind mit den Sammelringen (nicht sichtbar in Figur 4) verbunden, und die Verbindung zwischen den Sammelringen 3 und den Dioden 5 ist durch eine Gruppe von Verbindern 16 gegeben, welche dazu ausgelegt ist, die Sammelringe 3 zu übergreifen, welche endständiger angeordnet sind als der Sammelring 3, welcher mit der Diode 5 verbunden werden soll.

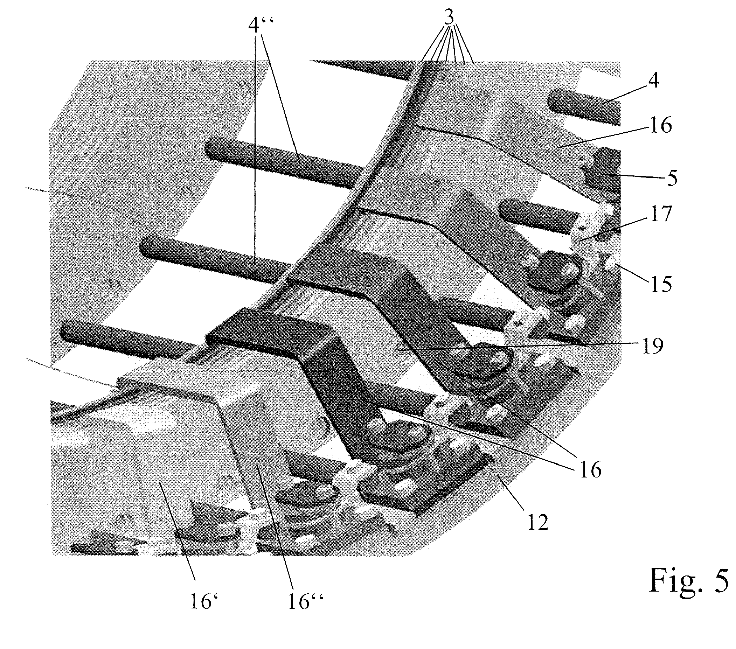

Figur 5 zeigt eine Ansicht äquivalent zu jener wie in Figur 4 dargestellt, wobei Teile des Gehäuses und der Abschirmungskomponenten (Mandrel) des Rotors sowie das Blechpaket 24 und der Haltering entfernt sind. Zur besseren Sichtbarkeit sind diejenigen direkten Stäbe 4', welche direkt mit den Sammelringen 3 verbunden sind, ebenfalls entfernt. Wie man in Figur 5 sehen kann, sind die Verbinder 16 in systematischer Weise angeordnet und verbinden die Sammelringe 3 mit den Dioden 5. So verbindet der unterste Verbinder 16' den Sammelring 3, welcher am nächsten zu den Dioden angeordnet, und dementsprechend der endständige Sammelring 3 ist. Der anschliessende Verbinder 16" verbindet den innersten Sammelring 3 und die folgenden Verbinder verbinden die benachbarten Sammelringe 3 in einer Sequenz, bis der äusserste Sammelring wieder erreicht wird.

Wie ebenfalls aus Figur 5 entnommen werden kann, sind in den Sammelringen 3 Löcher 19 für die direkten Stäbe 4'vorgesehen. Abhängig vom Sammelring 3, mit dem ein bestimmter direkter Stab 4' verbunden werden soll, kann eine solche Konnektivität in diesem Loch 19 etabliert werden.

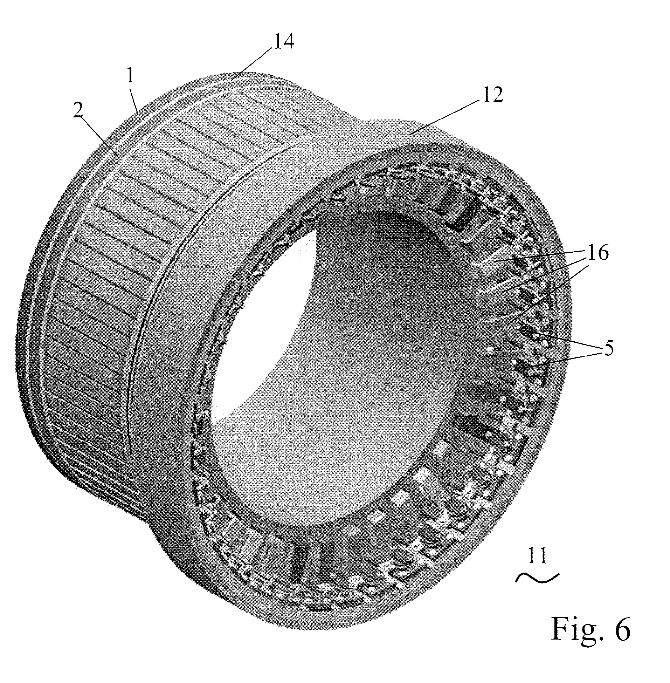

Figur 6 zeigt eine volle perspektivische Ansicht eines Rotors entsprechend der Erfindung. Es kann erkannt werden, dass die Stäbe 4 beinahe vollständig innerhalb des Blechpaketes 24 des Rotors versteckt sind, während die Dioden 5 und die Verbinder 16 und 17 freiliegen, so dass eine effiziente Kühlung dieser Teile möglich ist.

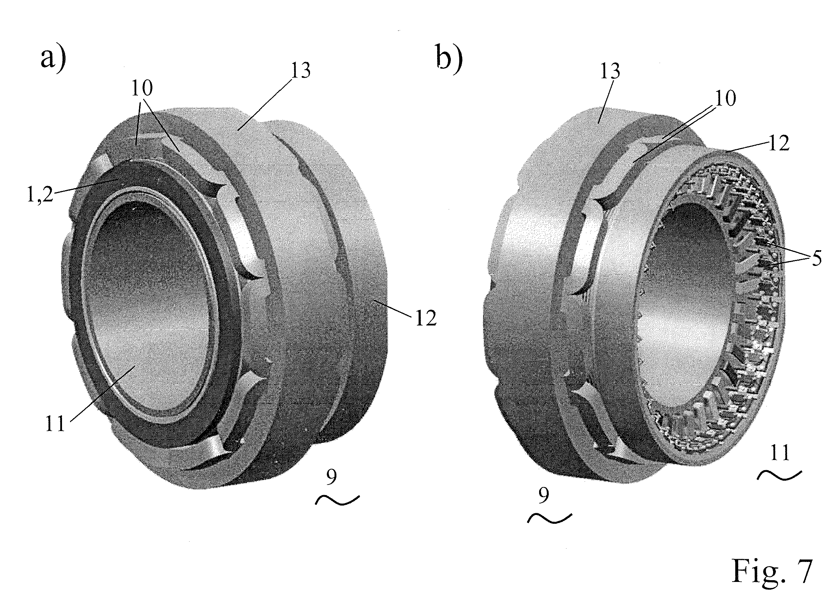

Figur 7 zeigt ebenfalls zwei perspektivische Ansichten, in diesem Fall unter Einschluss der statischen Teile, d.h. nicht nur den Rotor 11, sondern auch den Stator 9. Figur 7a) gibt eine Ansicht von der Seite, auf welcher die DC-Ringe 1 und 2 angeordnet sind, während Figur 7b) eine Sicht von jener Seite gibt, auf der die Sammelringe 3 und die Dioden 5 angeordnet sind.

Auch die Figuren 6 und 7 zeigen eine Konnektivität entsprechend der Figur 1. Es muss darauf hingewiesen werden, dass die Konnektivität nach Fig. 2 einfach durch Analogie erhalten werden kann, nämlich durch Anordnung des Satzes von Dioden und gleichermassen des Halteringes 12 auf jener Seite, auf der die DC-Ringe 1 und 2 angeordnet sind.

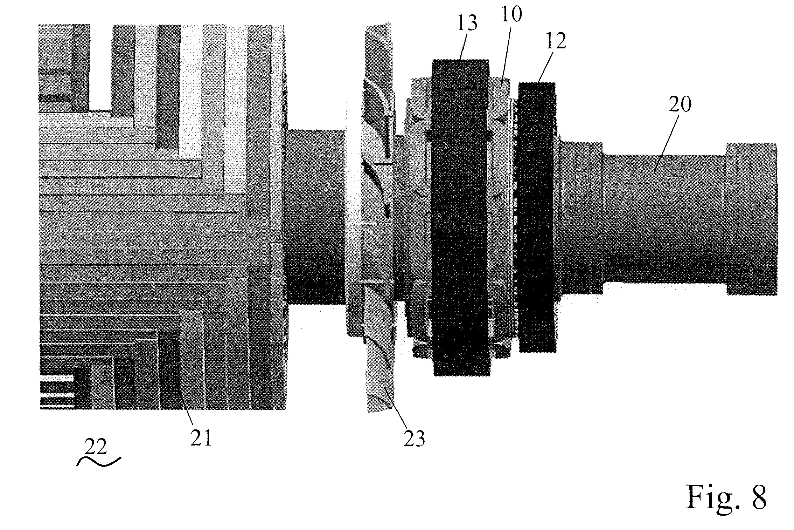

Um eine allgemeinere Ansicht zu geben, wie ein solcher bürstenloser Erreger innerhalb des gesamten Rotorsystems des Generators anzuordnen ist, zeigt Figur 8 den Rotor 22 des Generators mit seinen Wicklungen 21. Der bürstenlose Erreger, einschliesslich seiner statischen und rotierenden Teile, ist auf der gleichen Welle 20 wie der Rotor 22 des Generators angeordnet. Zwischen den Wicklungen 21 des Generator-Rotors 22 und dem bürsten losen Erreger ist ein Ventilator 23 zur Kühlung des gesamten Systems angeordnet. Aufgrund der Tatsache, dass der Ventilator 23 generell zwischen dem bürstenlosen Erreger und dem Generator angeordnet ist und normalerweise die DC-Ringe 1 und 2 auf der Generator-Rotor Seite der Welle anzuordnen sind, muss darauf hingewiesen werden, dass es angesichts der Kühlung der Dioden vorteilhaft sein dürfte, die Konnektivität nach Figur 2 zu verwenden, wo die Dioden entsprechend nahe beim Ventilator 23 angeordnet sind.

Der Rotor 11 des Erregers hat ein Blechpaket 24 (Eisen) mit einem Durchmesser von zirka 450 mm, und einem Aussendurchmesser von ungefähr 550 mm. Die axiale Länge des Traglagers (yoke) beträgt ungefähr 120 mm, die Anzahl der Phasen ist 70, die Spaltöffnung ist 4 mm, und der mittlere Radius der Mittelpunkte der Stäbe beträgt ungefähr 280 mm. Der Luftspalt beträgt 4mm. Der statische Teil hat 10 Pole und die Leiter sind als runde Kabel mit ungefähr 250 Windungen pro Spule ausgebildet. Alle Spulen 10 sind in Reihe geschaltet. Der Auslegungs-Gleichstrom beträgt 15 A.

Ein bürstenloser Erreger wie oben angegeben hat die folgenden Last-Charakteristiken: Widerstand < 1.4 mΩ; Auslegungsstrom 10.2 kA, Auslegungsspannung < 14.3 V; Auslegungsleistung < 150 kW; Induktivität 8.3 mH; Zeitkonstante > 5.9 s.

Generell kann gesagt werden, dass man eine Zunahme der Rotorströme bis zu 80 kA erwarten kann.

Die Figuren 3-8 zeigen einen Aufbau, welcher eine Topologie nach Figur 1 realisiert. Entsprechend sind im Aufbau nach den Figuren 3-8 die Dioden 5 und die Sammelringe 3 auf der gleichen endständigen axialen Seite des Rotors 11 angeordnet. Die Anordnung von beiden Elementen, namentlich der Dioden 5 und der Sammelringe 3 auf einer Seite des Rotors 11 führt zu sehr eingeschränkten räumlichen Bedingungen an diesem terminalen Ende des Rotors.

Dementsprechend verwendet eine bevorzugte Variante der vorliegenden Erfindung die Topologie, wie sie in Figur 2 angegeben ist, in welcher die Dioden 5 und die Sammelringe 3 auf entgegengesetzten Seiten des Rotors angeordnet sind, was zu günstigeren Möglichkeiten der Platzierung der Elemente an den unterschiedlichen Enden führt.

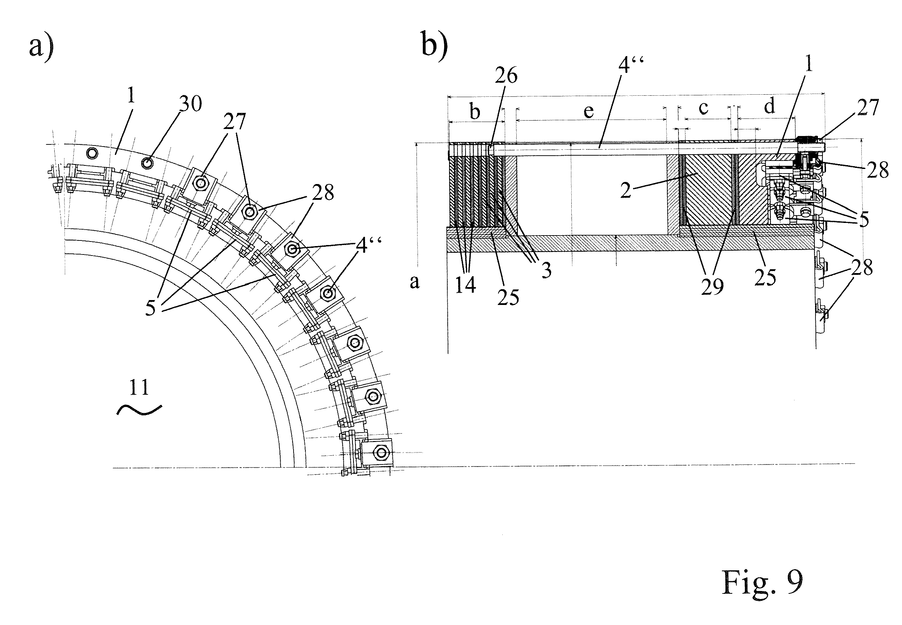

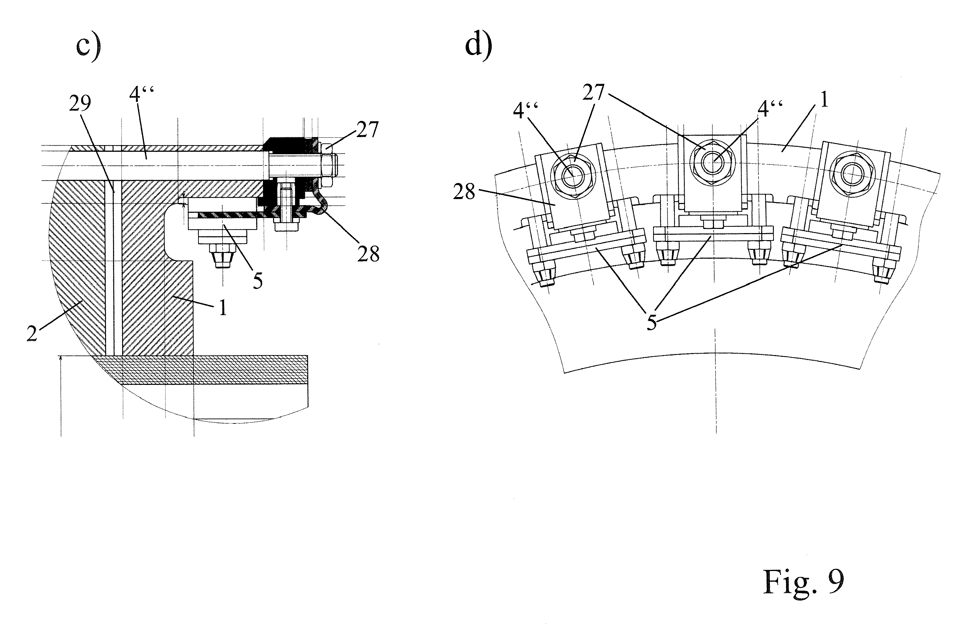

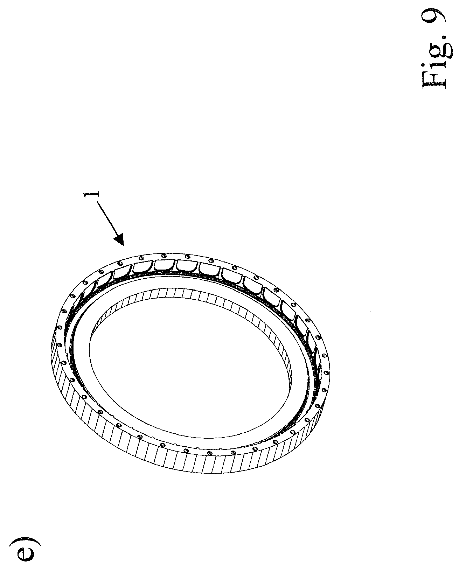

Ein entsprechendes Beispiel, welches eine Topologie entsprechend der Figur 2 realisiert, ist in Figur 9 angegeben. Figur 9a) gibt eine axiale Sicht auf das Ende eines Rotors 11, an welchem die Dioden 5 angeordnet sind. Demgegenüber zeigt Figur 9b) einen axialen Schnitt eines solchen Rotors, wobei der Schnitt durch einen der indirekten Stäbe 4" geht. Die Figur 9c) gibt die Details der Verbindung der indirekten Stäbe 4" mit den Dioden 5 in einer Schnittansicht an, Figur 9d) zeigt die Details rund um die Dioden, in einer Ansicht entsprechend der Figur 9a). Schliesslich gibt Figur 9e) eine perspektivische Ansicht auf den ersten DC-Ring, welcher in diesem Ausführungsbeispiel gleichzeitig der Ring ist, der die Dioden 5 trägt.

Insbesondere ist in Figur 9 ersichtlich, dass in diesem Fall die Sammelringe 3 an einem Ende zur linken Seite angeordnet und die Dioden 5 am anderen Ende nach rechts angeordnet sind. Die einzelnen Sammelringe 3 sind durch Isolationsschichten 14 oder Scheiben separiert, welche zwischen den Sammelringen 3 angeordnet sind. Die Sammelringe 3 sind mit Bohrungen versehen, welche es erlauben, dass die Stäbe 4 die Sammelringe 3 durchstossen und es ermöglichen, die Stäbe zu verbinden, wo dies erforderlich ist.

Eine Möglichkeit der Verbindung eines Stabes mit dem gewünschten Sammelring 3 ist in Figur 9b) dargestellt. In diesem Fall soll der indirekte Stab 4" mit dem zweiten Sammelring 3, gezählt von rechts, verbunden werden. Zu diesem Zweck ist der Sammelring 3 an dieser radialen Position mit einem etwas engeren Bohrloch versehen. Andererseits ist die Isolationsschicht des indirekten Stabes 4" an dem Abschnitt 26 entfernt, wo Kontakt zum entsprechenden Sammelring 3 hergestellt werden soll, und die Länge des indirekten Stabes 4" ist angepasst, um der Position des entsprechenden Sammelringes 3 zu entsprechen. Dementsprechend kann die Verbindung einfach hergestellt werden, indem Sammelringe mit entsprechend angepassten Weiten der Bohrungen angeordnet und Stäbe 4 der entsprechenden Länge eingeführt werden.

Auf der rechten Seite der Figur 9b), und genauer in Figur 9c), ist die Situation auf der Seite dargestellt, wo die Dioden 5 angeordnet sind. Es ist zu erkennen, dass die zwei DC-Ringe 1 und 2 benachbart zueinander angeordnet sind, voneinander durch eine Isolationsschicht 29 und bezüglich der zentralen Achse durch eine Isolationsschicht 25 getrennt. Die indirekten Stäbe 4" durchdringen beide DC-Ringe 1,2 und sind an ihrem äussersten rechten Ende in Figur 9b) mit den Dioden 5 verbunden.

Dies wird realisiert, indem die indirekten Stäbe 4" mit einem Endgewinde versehen sind, und indem eine entsprechende Mutter 27 vorgesehen ist, mittels welcher ein gebogener Metalleiter 28 auf einer Seite fest mit dem indirekten Stab 4" und auf der anderen Seite mit der Diode 5 verbunden ist. Der erste DC-Ring 1 wirkt zur Sammlung des DC-Teils einerseits elektrisch, dient aber andererseits auch als Träger für die Dioden 5, was den gesamten Aufbau vereinfacht.

Es muss darauf hingewiesen werden, dass in Figur 9 nur die indirekten Stäbe 4" sichtbar und angesprochen sind. Wie aus der Topologie entsprechend der Figur 2 erkannt werden kann, sind die direkten Stäbe 4' mit dem zweiten DC-Ring 2 verbunden. Dies bedeutet, dass bei Winkelpositionen zwischen denen der indirekten Stäbe 4" immer ein direkter Stab 4' angeordnet ist, welche aber in Figur 9 nicht sichtbar sind, da diese direkten Stäbe 4' den ersten DC-Ring 1 nicht durchdringen.

Im Aufbau entsprechend der Figur 9 enthält der erste DC-Ring 1 dementsprechend nur Bohrungen 30 an den radialen Positionen, an denen die indirekten Stäbe 4" angeordnet werden sollen (vergleiche auch Figur 9e). Die direkten Stäbe 4' enden vor dem ersten DC-Ring 1 und sind direkt mit dem zweiten DC-Ring 2 verbunden.

Entsprechend sind die zweiten DC-Ringe 2 mit so vielen Durchgangsbohrungen versehen, wie es indirekte Stäbe 4" gibt, aber zusätzlich dazu, an radialen Positionen zwischen den Durchgangsbohrungen für die indirekten Stäbe 4", mit einer gleichen Anzahl von weiteren Durchgangsbohrungen oder Sacklöchern für die direkten Stäbe 4'.

Typische Dimensionen eines Aufbaus entsprechend Figur 9 sind wie folgt: a = 560 mm; b = 50 mm; c = 40 mm; d = 50 mm; e = 130 mm. Entsprechend der erforderlichen Leistung und/oder Umdrehung, welche ausgehalten werden muss, können diese Dimensionen aber entsprechend skaliert werden.

### BEZUGSZEICHEN-LISTE

- 1: Ring, Gleichstromring (DC-Ring)
- 2: Ring, Gleichstromring (DC-Ring)
- 3: Sammelring, Sternpunktring
- 4: Stab, Leiterstab
- 4': direkter Stab
- 4": indirekter Stab
- 5: Diode
- 6: Induktionsfeld von 9 (erste Polarität)
- 7: Induktionsfeld von 9 (zweite Polarität)
- 8: Polteilung
- 9: Stator
- 10: Statorwicklung, Spule
- 11: Rotor des Erregers
- 12: Haltering von 11, Endring
- 13: umlaufender Ring von 9
- 14: Isolationsschicht
- 15: Schraube
- 16: Verbinder zu 3
- 17: Verbinder zu 4
- 18: Abschirmung (Mandrel)
- 19: Loch in 3
- 20: Welle von 22, Achse von 11
- 21: Wicklung von 22
- 22: Rotor des Generators, Generator-Rotor
- 23: Ventilator
- 24: Blechpaket
- 25: Isolationsschicht
- 26: Abschnitt von 4
- 27: Mutter
- 28: gebogener Metallleiter
- 29: Isolationsschicht zwischen 1 und 2
- 30: Bohrung in 1
- n: Anzahl der Stäbe 4 des Rotors des Erregers
- m: Anzahl von Polen des Erregers
- o: Anzahl von Sammelringen 3

## Patentansprüche

1. Rotor (11) für einen Erreger zur Speisung der Feldwicklung eines Rotors (22) eines Generators, **dadurch gekennzeichnet, dass**,
der Rotor (11) wenigstens zwei Leiterstäbe (4) umfasst, welche im Wesentlichen parallel zur Achse (20) des Rotors (11) angeordnet sind, dass die Stäbe (4) an ihrem ersten axialen Ende mit wenigstens einem Sammelring (3) verbunden sind, und dass die Stäbe (4) an ihrem zweiten axialen Ende einzeln mit zwei Ringen (1, 2) verbunden sind, wobei der Stromfluss in jedem Stab (4) mittels wenigstens eine Diode (5) nur in einer Richtung zulässig ist, so dass aufgrund eines statischen Feldes (6, 7) in den Leiterstäben (4) induzierter Wechselstrom, in den beiden Ringen (1, 2) in Gleichstrom (DC) konvertiert wird.

2. Rotor (11) nach Anspruch 1, **dadurch gekennzeichnet, dass** es zwei Gruppen von Leiterstäben (4' und 4") gibt, wobei die erste Gruppe von Stäben (4') an ihrem ersten axialen Ende direkt mit wenigstens einem Sammelring (3) und an ihrem zweiten axialen Ende mit einem der beiden Ringe (1, 2) verbunden ist, und die zweite Gruppe von Stäben (4") an ihrem ersten axialen Ende mittels einer Diode (5) indirekt mit wenigstens einem Sammelring (3) und an ihrem zweiten axialen Ende mit dem anderen der beiden Ringe (2, 1) verbunden ist.

3. Rotor (11) nach Anspruch 1, **dadurch gekennzeichnet, dass** es zwei Gruppen von leitenden Stäben (4' und 4") gibt, wobei die erste Gruppe (4') an ihrem ersten axialen Ende mit wenigstens einem Sammelring (3) verbunden ist und an ihrem zweiten axialen Ende direkt mit einem der beiden Ringe (2, 1) verbunden ist, und dass die zweite Gruppe von Stäben (4") an ihrem ersten axialen Ende mit wenigstens einem Sammelring (3) verbunden ist und an ihrem zweiten axialen Ende mittels wenigstens einer Diode (5) indirekt mit dem anderen der beiden Ringe (1, 2) verbunden ist.

4. Rotor (11) nach einem der vorhergehenden Ansprüche, **dadurch gekennzeichnet, dass** der Erreger ein statisches Feld (6, 7) mit m Polen umfasst, und dass der Rotor n Stäbe (4) umfasst, welche gleichmässig um den Umfang des Rotors (11) verteilt sind, wobei die Stäbe derart verbunden sind, dass es wenigstens einen direkt verbundenen Stab (4') gibt, welcher einem statischen Induktionsfeld (6) einer ersten Polarität unterworfen ist, und dass es wenigstens einen indirekt verbundenen Stab (4") gibt, welcher einem statischen Induktionsfeld (7) einer zweiten Polarität unterworfen ist, und wobei Paare oder Gruppen gebildet durch wenigstens einen direkt verbundenen Stab (4') und wenigstens einen indirekt verbundenen Stab (4") mit dem gleichen Sammelring (3) verbunden sind.

5. Rotor (11) nach einem der vorhergehenden Ansprüche, **dadurch gekennzeichnet, dass** der Erreger für ein statisches Feld (6, 7) mit m Polen ausgelegt ist, und dass der Rotor n Stäbe (4) aufweist, welche gleichmässig um den Umfang des Rotors (11) verteilt sind, und dass die Anzahl(o) der Sammelringe (3) gleich o = m/n ist, derart verbunden, dass es für jeden Pol des statischen Feldes (6, 7) einen direkt verbundenen Stab (4') gibt, welcher einem statischen Induktionsfeld (6) einer ersten Polarität unterworfen ist, und dass es einen indirekt verbundenen Stab (4") gibt, welcher einem statischen Induktionsfeld (7) einer zweiten Polarität unterworfen ist, und wobei für jedes Poolpaar des Stators (9) ein Paar gebildet durch einen direkt verbundenen Stab (4') und einen indirekt verbundenen Stab (4") mit dem gleichen Sammelring (3) verbunden ist, und wobei äquivalente Paare von Stäben (4) von unterschiedlichen Poolpaaren mit dem gleichen Sammelring (3) verbunden sind.

6. Rotor nach Anspruch 5, **dadurch gekennzeichnet, dass** entlang dem Umfang des Rotors (11) jeder o-te Stab (4) des Rotors (11) direkt oder indirekt mit dem gleichen Sammelring (3) verbunden ist.

7. Rotor (11) nach einem der vorhergehenden Ansprüche, **dadurch gekennzeichnet, dass** die Sammelringe (3) umlaufend sind, und dass vorzugsweise auch die beiden Ringe (1, 2) umlaufend sind.

8. Rotor (11) nach einem der vorhergehenden Ansprüche, **dadurch gekennzeichnet, dass** in jedem elektrischen Pfad eine einzige Diode (5) oder eine Gruppe von Dioden (5) vorgesehen ist, wobei die Dioden (5) des Rotors (11) parallel angeordnet sind und wobei, wenn eine Gruppe von Dioden (5) vorgesehen ist, alle Dioden von paralleler Polarität sind, unabhängig davon, ob sie in Reihe oder parallel angeordnet sind.

9. Rotor (11) nach einem der vorhergehenden Ansprüche, **dadurch gekennzeichnet, dass** die Stäbe (4) nahe bei der radialen Oberfläche des Rotors (11) angeordnet sind, vorzugsweise so nahe wie möglich beim Luftspalt zwischen dem Rotor (11) und dem äusseren statischen Kern des Stators (9).

10. Rotor (11) nach einem der vorhergehenden Ansprüche, **dadurch gekennzeichnet, dass** wenigstens 4 Leiterstäbe (4), vorzugsweise wenigstens 8 oder wenigstens 20 Leiterstäbe (4), angeordnet sind, und besonders bevorzugt 70 leitende Stäbe (4) vorhanden sind, welche alle gleichmässig um den Umfang des Rotors (11) verteilt sind.

11. Rotor (11) nach einem der vorhergehenden Ansprüche, **dadurch gekennzeichnet, dass** die Stäbe (4) aus Aluminium oder Kupfer gefertigt sind, mit einer im Wesentlichen kreisrunden Querschnittfläche mit einem Durchmesser im Bereich von 5 bis 20 mm, vorzugsweise mit einem Durchmesser im Bereich von 8 bis 15 mm.

12. Rotor (11) nach einem der vorhergehenden Ansprüche, **dadurch gekennzeichnet, dass** die Ringe (1-3) aus Eisen, Aluminium oder Kupfer mit einer Querschnittsfläche im Bereich von 500 bis 3000 mm², vorzugsweise mit einer Querschnittsfläche im Bereich von 1000 bis 2000 mm², ausgebildet sind.

13. Rotor (11) nach einem der vorhergehenden Ansprüche, **dadurch gekennzeichnet, dass** er bei einer Geschwindigkeit von 6000 bis 8000 Umdrehungen pro Minute betreibbar ist, wobei in den beiden Ringen (1, 2) ein Gleichstrom von mehr als 2000 Ampere, vorzugsweise ein Gleichstrom von mehr als 10000 Ampere, induziert wird.

14. Rotor (11) nach einem der vorhergehenden Ansprüche, **dadurch gekennzeichnet, dass** das statische Feld (6, 7) durch eine Feldwicklung (10) am äusseren statischen Kern des Stators (9) zur Verfügung gestellt wird, welches ein mehrpoliges statisches Magnetfeld erzeugt.

15. Rotor (11) nach einem der vorhergehenden Ansprüche, **dadurch gekennzeichnet, dass** der Rotor (11) auf der gleichen Welle (20) angeordnet ist wie der Generator-Rotor (22), und dass die beiden DC-Ringe (1, 2) auf der Generator-Rotor (22) Seite des Rotors (11) und die Sammelringe (3) auf der anderen Seite des Rotors (11) angeordnet sind.

16. Rotor (11) nach Anspruch 14, **dadurch gekennzeichnet, dass** die Dioden (5) auf der Generator-Rotor (22) Seite des Rotors (11) angeordnet sind.

17. Rotor (11) nach einem der vorhergehenden Ansprüche, **dadurch gekennzeichnet, dass** die Dioden (5) auf der inneren Oberfläche eines Halteringes (12) des Rotors (11) angeordnet sind.

18. Rotor (11) nach einem der vorhergehenden Ansprüche, **dadurch gekennzeichnet, dass** wenigstens einer der Ringe (1, 2) gleichzeitig als Trägerring für die Dioden (5) dient.

19. Rotor (11) nach Anspruch 18, **dadurch gekennzeichnet, dass** der wenigstens eine Ring (1) wenigstens einen zylindrischen Abschnitt umfasst, auf dessen radial innerer Seite die Dioden (5) angeordnet sind.

20. Rotor (11) nach einem der Ansprüche 18 oder 19, **dadurch gekennzeichnet, dass** ein Ring (1) ein im Wesentlichen L-förmiges Profil aufweist, wobei ein Schenkel im Wesentlichen radial und der andere Schenkel im Wesentlichen axial angeordnet ist, und letzterer als Träger für die Dioden (5) dient.

21. Rotor (11) nach einem der vorhergehenden Ansprüche, **dadurch gekennzeichnet, dass** die Dioden an einem terminalen Ende des Rotors (11) und die Sammelringe am anderen terminalen Ende des Rotors (11) angeordnet sind.

22. Bürstenloser Erreger zur Verwendung mit einem Synchrongenerator zur Speisung der Feldwicklungen seines Rotors, **dadurch gekennzeichnet, dass** er einen Rotor (11) nach einem der Ansprüche 1 bis 21 umfasst.

23. Bürstenloser Erreger nach Anspruch 22, **dadurch gekennzeichnet, dass** durch wenigstens eine Feldwicklung (1) ein mehrpoliges statisches Feld (6, 7) induziert wird, welches mit einem Gleichstrom von 1 bis 100 Ampere, vorzugsweise im Bereich von 5 bis 15 Ampere gespeist wird, oder dass das mehrpolige statische Feld (6, 7) durch wenigstens einen Permanent-Magneten erzeugt wird.

24. Bürstenloser Erreger nach einem der Ansprüche 22 oder 23, **dadurch gekennzeichnet, dass** der Stator (9) ein mehrpoliges statisches Feld (6,7) mit m Polen zur Verfügung stellt, wobei m eine gerade ganze Zahl im Bereich zwischen 4 und 16 ist, vorzugsweise zwischen 6 und 10.

25. Bürstenloser Erreger nach einem der Ansprüche 22 bis 24, **dadurch gekennzeichnet, dass** der Rotor (11) auf der gleichen Welle (20) wie der Generator-Rotor (22) angeordnet ist, und dass die zwei DC-Ringe (1, 2) auf der Generator-Rotor (22) Seite des Rotors (11) und die Sammelringe (3) auf der anderen Seite des Rotors (11) angeordnet sind.
